(19) Europäisches Patentamt / European Patent Office / Office européen des brevets

(11) **EP 1 789 222 B1**

(12) **EUROPÄISCHE PATENTSCHRIFT**

(45) Veröffentlichungstag und Bekanntmachung des Hinweises auf die Patenterteilung:
**07.03.2012 Patentblatt 2012/10**

(21) Anmeldenummer: **05774428.6**

(22) Anmeldetag: **17.08.2005**

(51) Int Cl.:
**B23B 29/034** (2006.01) **B23Q 11/00** (2006.01)

(86) Internationale Anmeldenummer:
**PCT/EP2005/008912**

(87) Internationale Veröffentlichungsnummer:
**WO 2006/029682 (23.03.2006 Gazette 2006/12)**

(54) **WERKZEUGKOPF FÜR DEN EINSATZ IN WERKZEUGMASCHINEN MIT UNWUCHTTILGUNG**

TOOL HEAD FOR MACHINE-TOOLS WITH UNBALANCE DAMPING

TETE D'OUTIL A UTILISER DANS DES MACHINES-OUTILS AVEC AMORTISSEMENT DU DESEQUILIBRE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **14.09.2004 DE 102004044860**
**02.12.2004 DE 102004058286**

(43) Veröffentlichungstag der Anmeldung:
**30.05.2007 Patentblatt 2007/22**

(73) Patentinhaber: **Komet Group GmbH**
**74354 Besigheim (DE)**

(72) Erfinder:
• **FRONIUS, Jürgen**
**70565 Stuttgart (DE)**
• **HÖRL, Roland**
**74357 Bönnigheim (DE)**

(74) Vertreter: **Wolf, Eckhard**
**Patentanwälte Wolf & Lutz**
**Hauptmannsreute 93**
**70193 Stuttgart (DE)**

(56) Entgegenhaltungen:
**EP-A- 0 488 774       EP-A- 0 907 444**
**DE-A1- 10 244 857     DE-A1- 19 717 172**
**DE-C- 839 590         DE-C- 923 888**
**GB-A- 2 066 128**

**Beschreibung**

Die Erfindung betrifft einen Werkzeugkopf gemäß den Oberbegriffender Ansprüche 1,8,13 bzw. 32.

Ein solcher Werkzeugkopf wird beispielweise in EP0488774 offenbart.

Alle Systeme zum Wuchten von schnelldrehenden Objekten zielen darauf ab, den Masseschwerpunkt der rotierenden Körper auf die Rotationsachse - zu legen. Dies wird beispielsweise dann nötig, wenn ein Werkzeugkopf über bewegte Teile verfügt und bei der Rotation ein variabler Unwuchtvektor auftritt. Dies ist bei Werkzeugen der Fall, die über eine während der Rotation radial zustellbare Schneide verfügen und somit Drehbearbeitungen an feststehenden Werkstücken ermöglichen. Bei rotierenden Systemen mit variablem Schwerpunkt, wie dies beispielsweise bei Plandrehköpfen der Fall ist, die einen Werkzeugschieber als Verursacher der variablen Unwucht aufweisen, wird zur Wuchtung üblicherweise ein Ausgleichsschieber verwendet, der entgegengesetzt zum Werkzeugschieber bewegt wird. Dabei ist bis heute kein System bekannt, welches ein Aufsummieren der Fliehkräfte des Werkzeugschiebers und des Ausgleichsschiebers auf den Antriebsstrang verhindert. Der Ausgleichsschieber und der Werkzeugschieber verursachen demgemäß Fliehkräfte, die sich beim Verstellen aufaddieren und vom Antriebsstrang überwunden werden müssen.

Ausgehend hiervon liegt der Erfindung die Aufgabe zugrunde, den Werkzeugkopf der eingangs angegebenen Art dahingehend zu verbessern, dass neben einer Unwuchttilgung auch eine Reduktion der Betätigungskräfte für die Schieberverstellung erzielt wird.

Zur Lösung dieser Aufgabe wird die in den Patentansprüchen 1,8,13 bzw. 32 angegebenen Merkmalskombinationen vorgeschlagen. Vorteilhafte Ausgestaltungen und Weiterbildungen der Erfindung ergeben sich aus den abhängigen Ansprüchen.

Die aus EP0488774 bekannte Lösung geht vor allem von dem Gedanken aus, dass mindestens zwei Ausgleichskörper vorgesehen sind, die mit ihrem Massenschwerpunkt seitlich über die Verschiebeachse überstehen und an im Abstand voneinander angeordneten Stellen relativ zum Schieber und relativ zum Grundkörper zwangsgeführt und/oder verschwenkbar sind. Die dadurch bedingte Zwangskopplung zwischen der Schieber- und der Ausgleichskörper-Bewegung ermöglicht es, dass der Antriebsmechanismus beispielsweise nur am Schieber angreift und der Ausgleichskörper zur Unwuchttilgung zwangsgeführt mitbewegt wird. Da der Schieber das genauigkeitsbestimmende Teil des Werkzeugkopfs ist, greift der Antriebsstrang zweckmäßig am Schieber an. Damit ist es möglich, dass neben dem Unwuchtausgleich unabhängig von der Drehzahl zugleich eine Reduktion der Betätigungskräfte erzielt wird. Im Idealfall wird bei einem Unwuchtausgleich zugleich ein Ausgleich der Betätigungskräfte erzielt. Dazu müssen die Lagerkräfte und die Führungskräfte durch Anpassung der einander zugeordneten Lager- und Führungskonfigurationen exakt aufeinander abgestimmt werden. Da für die Bewegungabläufe ein gewisses Lager- und Führungsspiel zugelassen werden muss, wird dieser Idealfall nicht ganz erreicht werden können. Die noch verbleibenden Differenzkräfte, wie Reaktionsreibungskräfte, die auch drehzahlabhängig sein können, sind dann noch vom Antriebsstrang zu überwinden.

Erfindungsgemäß sind die Ausgleichskörper um eine schieberfeste Schwenkachse verschwenkbar gelagert und im Abstand von der Schwenkachse relativ zum Grundkörper zwangsgeführt.

Besonders vorteilhaft ist eine symmetrische Ausgestaltung, bei der zwei Ausgleichskörper vorgesehen sind, die um die gleiche, die Verschiebeachse des Schiebers senkrecht schneidende Schwenkachse nach entgegengesetzten Richtungen verschwenkbar gelagert sind. In diesem Falle sind die Ausgleichskörper zweckmäßig bezüglich der Verschiebeachse im Wesentlichen spiegelbildlich ausgebildet und angeordnet.

Eine bevorzugte Ausgestaltung der Erfindung sieht vor, dass der Schieber eine Aufnahme für das Werkzeug aufweist, deren Aufnahmeachse vorzugsweise parallel zu den schieberfesten Schwenkachsen der Ausgleichskörper angeordnet ist. Vorteilhafterweise fallen die Aufnahmeachse und die schieberfesten Schwenkachsen der Ausgleichskörper zusammen. Für spezielle Anwendungen ist es denkbar, dass die Aufnahmeachse und die schieberfesten Schwenkachsen der Ausgleichskörper auch schräg zueinander ausgerichtet sind.

Zur Vermeidung dynamisch auftretender Drehmomente, die am Werkzeugkopf beim Verstellvorgang angreifen könnten, wird erfindungsgemäß vorgeschlagen, dass die Massenschwerpunkte des mit dem Werkzeug bestückten Schiebers und der Ausgleichskörper bezüglich der Rotationsachse im Wesentlichen auf gleicher axialer Höhe angeordnet sind.

Gemäß einer vorteilhaften baulichen Ausgestaltung der Erfindung ist das schieberfeste Schwenklager als die Werkzeugaufnahme umgebende Kreisnut ausgebildet, in die die Ausgleichskörper mit jeweils mindestens zwei als Zapfen oder Rollen ausgebildeten Lagerelementen eingreifen. Diese Konstruktion lässt sich grundsätzlich auch dahingehend abwandeln, dass die schieberfesten Zwangsführungen durch eine die Werkzeugaufnahme umgebende Ovalnut gebildet ist, deren längere Ovalachse zweckmäßig parallel zu der Verschieberichtung des Schiebers ausgerichtet ist.

Weiter ist es in baulicher Hinsicht von Vorteil, wenn die Ausgleichskörper eine über eine zentrale Lagerpartie segmentartig überstehende, massenbehaftete Scheibe tragen, wobei die schieberfesten Schwenkachsen der Ausgleichskörper zweckmäßig parallel zur Rotationsachse ausgerichtet sind.

Gemäß der Erfindung weisen der Grundkörper und die Ausgleichskörper unmittelbar oder mittelbar miteinander kämmende Verzahnungspartien als Zwangsführungsmittel auf. Damit wird erreicht, dass die Ausgleichskörper beim Verstellvorgang mit einer ausgleichskörperfesten Verzahnungspartie unmittelbar oder über ein Zwischenzahnrad mittelbar entlang einer komplementären grundkörperfesten Verzahnungspartie zwangsgeführt sind. Vorteilhafterweise sind dabei die ausgleichsschieberfesten Verzahnungspartien als zur schieberfesten Schwenkachse der Ausgleichsschieber konzentrisch gekrümmte Zahnreihen ausgebildet, während die grundkörperfesten Verzahnungspartien als parallel zur Verschieberichtung des Schiebers ausgerichtete lineare Zahnreihen ausgebildet sein können.

Für den Fall, dass mindestens eine der ausgleichsschieberfesten Verzahnungspartien unmittelbar in eine benachbarte grundkörperfeste Verzahnungspartie eingreift, befindet sich die ausgleichsschieberfeste Verzahnungspartie bezüglich der Schwenkachse zweckmäßig auf der Seite des Massenschwerpunkts des zugehörigen Ausgleichskörpers. Falls andererseits die ausgleichsschieberfesten Verzahnungspartien mittelbar über ein Zwischenzahnrad mit einer benachbarten grundkörperfesten Verzahnungspartie kämmen, befinden sich die ausgleichsschieberfesten Verzahnungspartien bezüglich der Schwenkachse auf der dem Massenschwerpunkt des zugehörigen Ausgleichskörpers gegenüberliegenden Seite. Im letzteren Fall können die Zwischenzahnräder entweder in einem grundkörperfesten oder in einem schieberfesten Drehlager gelagert sein. Vornehmlich bei schiebefesten Drehlagern greifen die Zwischenzahnräder mit einer Achswelle des Drehlagers durch eine vorzugsweise gekrümmte langgestreckte Durchtrittsöffnung des jeweils anderen Ausgleichskörpers hindurch.

Eine weitere vorteilhafte Ausgestaltung der Erfindung sieht vor, dass die Ausgleichskörper beim Verstellvorgang mit mindestens einem ausgleichskörperfesten Stützelement entlang mindestens einer grundkörperfesten Führungskurve oder -kulisse zwangsgeführt sind. Kinematisch äquivalent hierzu ist eine Konfiguration, bei der die Ausgleichskörper beim Schwenkvorgang mit mindestens einem grundkörperfesten Stützelement entlang mindestens einer ausgleichskörperfesten Führungskurve oder -kulisse zwangsgeführt sind.

Vorteilhafterweise sind die Stützelemente als an dem Ausgleichskörper überstehende Gleitschuhe oder Rollzapfen ausgebildet, die gegen die im Grundkörper angeordneten Führungskurven oder -kulissen gleitend oder rollend abgestützt oder hydrodynamisch gelagert sind. Die Führungskurven oder -kulissen sind vorteilhafterweise in Form von Langlöchern oder Nuten in eine Grundkörperwand eingeformt.

Zur Vermeidung einer geometrische Überbestimmung zwischen Stützelementen und Führungskurven oder -kulissen, die zu einer ungewollten Verkeilung führen könnten, wird gemäß einer vorteilhaften Ausgestaltung der Erfindung vorgeschlagen, dass jedem Stützelement eine eigene Führungskurve oder -kulisse zugeordnet ist. Für den Fall, dass jeder Ausgleichskörper zwei Stützelemente aufweist, bedeutet dies, dass jedem Ausgleichskörper auch zwei Führungskurven oder -kulissen zugeordnet werden müssen.

Die Führungskurven oder -kulissen der verschiedenen Ausgleichskörper sind im Symmetriefall zweckmäßig spiegelbildlich zueinander angeordnet. Grundsätzlich ist es gemäß der Erfindung auch möglich, dass die Führungskurven oder -kulissen als im Wesentlichen radial ausgerichtete Langlöcher oder Nuten in den Ausgleichskörpern ausgebildet sind, in die ein am Grundkörper angeordneter achsparallel ausgerichteter Führungszapfen, Nutenstein, Kulissenstein oder eine entsprechende Führungsrolle eingreifen.

In Spezialfällen ist es denkbar, dass beim Verstellen eine Schwerpunktsver lagerung auch in axialer Richtung erfolgt, beispielsweise um an Störkonturen vorbeizukommen. In diesem Falle wird gemäß der Erfindung vorgeschlagen, dass die Ausgleichskörper relativ zum Schieber und/oder zum Grundkörper in einer Taumelführung mit zur Rotationsachse achsparalleler Bewegungskomponente zwangsgeführt und/oder verschwenkbar sind.

Eine besonders einfache Anpassung des Ausgleichssystems an unterschiedliche Massen der einzusetzenden Werkzeuge wird dadurch ermöglicht, dass die Ausgleichskörper mit modulmäßig gegeneinander austauschbaren Masselementen bestückt sind, die vorzugsweise unter Beibehaltung der ausgleichskörperseitigen Massenschwerpunkte gegeneinander austauschbar sind.

Das gleiche Ergebnis kann alternativ dazu auch mit Ausgleichskörpern erzielt werden, die im Werkzeugkopf modulmäßig gegeneinander austauschbar sind. Gemäß einer weiteren alternativen Ausgestaltung der Erfindung ist ein aus einem Grundkörperteil und den Ausgleichskörpern bestehendes austauschbares Ausgleichsmodul vorgesehen, das grundsätzlich auch den Werkzeugschieber umfassen kann.

Im Folgenden wird die Erfindung anhand der in der Zeichnung in schematischer Weise dargestellten Ausführungsbeispiele näher erläutert. Es zeigen

Fig. 1          eine schaubildliche Darstellung eines Werkzeugkopfs mit Wuchtausgleich gemäß einer ersten Ausführungsform;

Fig. 2a und b          den Werkzeugkopf nach Fig. 1 in schaubildlicher Darstellung und in einer Draufsicht mit einem abgenommenen Ausgleichskörper;

Fig. 3          Koordinatensysteme des Werkzeugkopfs nach Fig. 1 und 2;

Fig. 4          geometrischer Ort der Führungszapfen eines der Ausgleichskörper sowie des Massenschwerpunkts

EP 1 789 222 B1

des Ausgleichskörpers in Abhängigkeit vom Schieber-Hub im Grundkörper-Koordinatensystem;

Fig. 5a und b ein gegenüber Fig. 1 und 2 abgewandeltes Ausführungsbeispiel eines Werkzeugkopfs mit Ausgleichskörpern in einer schaubildlichen Darstellung und in Draufsicht;

Fig. 6a und b ein weiteres Ausführungsbeispiel eines Werkzeugkopfs mit Ausgleichskörpern in aufgebrochener schaubildlicher Darstellung und in Draufsicht;

Fig. 7a, b und c ein weiteres abgewandeltes Ausführungsbeispiel eines Werkzeugkopfs mit Ausgleichskörpern in aufgebrochener schaubildlicher Darstellung, Draufsicht und in einer Ausschnittsvergrößerung;

Fig. 8a und b ein weiteres abgewandeltes Ausführungsbeispiel eines Werkzeugkopfs in aufgebrochener schaubildlicher Darstellung und in Draufsicht;

Fig. 9a bis d ein weiteres Ausführungsbeispiel eines Werkzeugkopfs mit Ausgleichskörpern mit zwei schaubildlichen Darstel- lungen in verschiedenen Verstellzuständen, einer Draufsicht und einer Seitenansicht;

Fig. 10a bis c eine Seitenansicht und zwei Draufsichten eines Werkzeugkopfs mit Schieber und schwenkbaren Ausgleichskörpem sowie einer unmittelbar kämmenden Verzahnungsführung;

Fig. 11a bis c Darstellungen entsprechend Fig. 10 für ein Ausführungsbeispiel mit mittelbar kämmenden Verzahnungsführungen und schiebergelagertem Zwischenzahnrad;

Fig. 12a bis c eine Darstellung entsprechend Fig. 11 mit grundkörpergelagerten Zwischenzahnrädern.

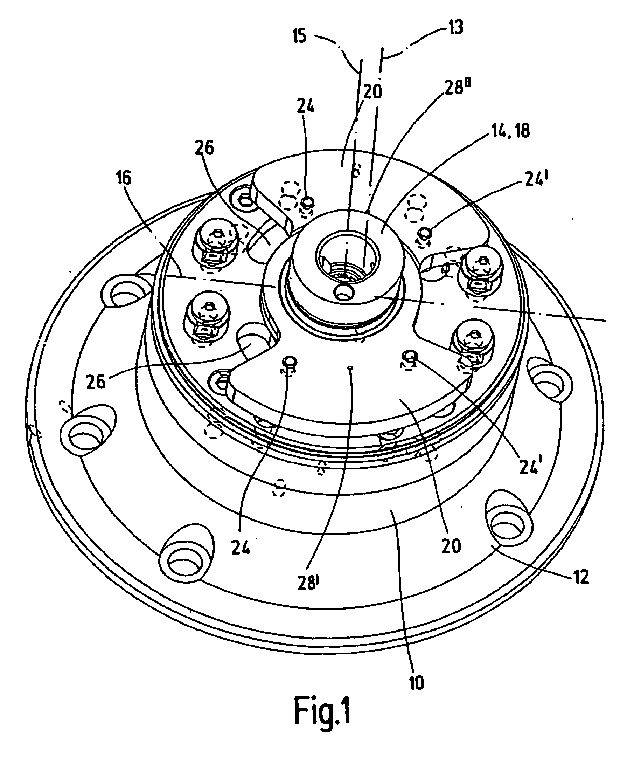

Die in der Zeichnung dargestellten Werkzeugköpfe sind für den Einsatz in Werkzeugmaschinen bestimmt. Sie weisen einen Grundkörper 10 auf, der bei dem in Fig. 1 gezeigten Ausführungsbeispiel über einen Flansch 12 mit der Stirnseite einer nicht dargestellten Maschinenspindel starr verbindbar und mit dieser um eine Rotationsachse 13 drehbar ist. Am Grundkörper ist ein Werkzeugschieber 14 gelagert, der entlang einer bezüglich der Rotationsachse 13 radial ausgerichteten Verschiebeachse 16 gegenüber dem Grundkörper 10 verstellbar ist und eine Aufnahme 18 für ein nicht dargestelltes Schneidwerkzeug trägt. Weiter sind zwei Ausgleichskörper 20 vorgesehen, die zur Tilgung einer durch den Schieber 14 und das Schneidwerkzeug hervorgerufenen Unwucht bestimmt sind. Die beiden Ausgleichskörper stehen mit ihrem Massenschwerpunkt 28', 28" seitlich über die Verschiebeachse 16 über und sind relativ zum Schieber 14 und zum Grundkörper 10 schwenkbar und/oder zwangsgeführt. Bei den in Fig. 1, 2a, b, 5a, b und 6a, b gezeigten Ausführungsbeispielen sind die Ausgleichskörper 20 um eine schieberfeste, mit der Achse der Werkzeugaufnahme 18 fluchtende Schwenkachse 15 verschwenkbar gelagert und im Abstand von der Schwenkachse 15 relativ zum Grundkörper zwangsgeführt.

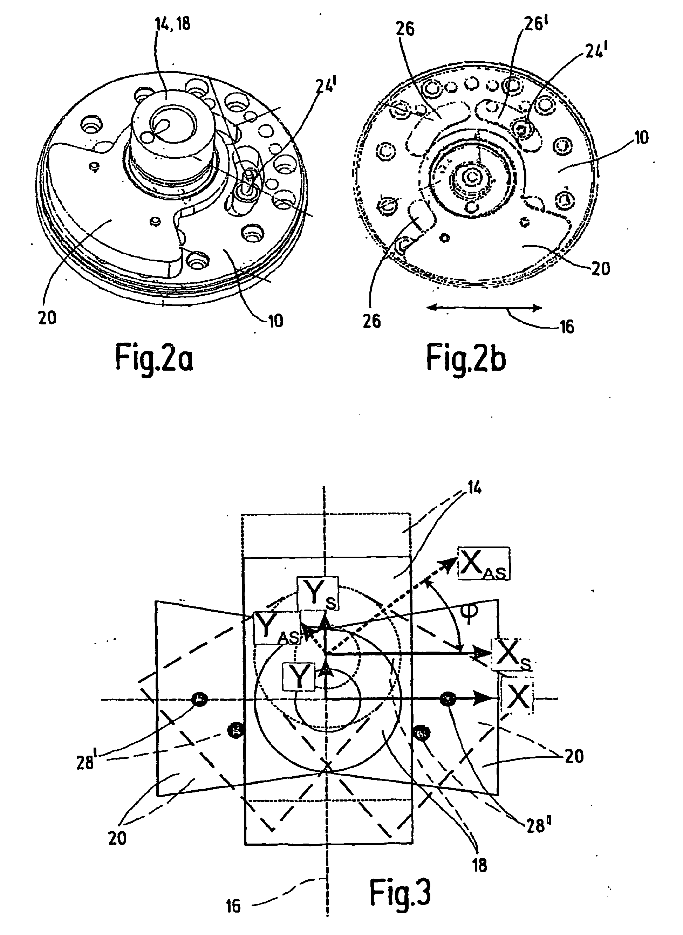

Bei dem in Fig. 1, 2a und b gezeigten Ausführungsbeispiel sind die Ausgleichskörper 20 mit jeweils zwei als Rollzapfen ausgebildeten Stützelementen 24 versehen, mit denen sie entlang jeweils einer grundkörperfesten, als gekrümmtes Langloch ausgebildeten Führungskulisse 26,26' zwangsgeführt sind.

Zur mathematischen Bestimmung der optimalen Führungskulissen 26, 26', sind die in Fig. 3 dargestellten Koordinatensysteme des Werkzeugkopfes zu berücksichtigen:

$x/y$ Koordinatensystem des Grundkörpers
$x_s/y_s$ Koordinatensystem des Schiebers
$x_{AS}/y_{AS}$ Koordinatensystem des Ausgleichskörpers

Die Bewegungsabläufe des Schiebers 14 und der zugehörigen Ausgleichskörper 20 sind in Fig. 3 in durchgezogenen und gestrichelten Linien angedeutet. Die Schwerpunkte 28',28" der Ausgleichskörper 20 wandern beim Verschiebevorgang auf einer Bahnkurve in der entgegengesetzten Richtung des Schiebers 14. Legt man die Verschieberichtung 16 des Schiebers 14 in die y-Achse des Grundkörpers und die Drehachsen 15 der beiden Ausgleichskörper 20 in den Ursprung des Koordinatensystems des Schiebers 14, so ergeben sich für die Berechnung des geometrischen Ortes eines beliebigen Ausgleichskörperpunktes $x_{AS}$, $y_{AS}$ im Koordinatensystem des Grundkörpers x,y folgende Beziehungen

4

$$\begin{pmatrix} x \\ y \end{pmatrix} = \begin{pmatrix} x_S \\ y_S \end{pmatrix} + \begin{pmatrix} 0 \\ Hub \end{pmatrix} \qquad \begin{pmatrix} x_S \\ y_S \end{pmatrix} = \begin{pmatrix} \cos\varphi & -\sin\varphi \\ \sin\varphi & \cos\varphi \end{pmatrix} \cdot \begin{pmatrix} x_{AS} \\ y_{AS} \end{pmatrix}$$

Die Kombination der beiden Formeln führt zu folgender Bahnkurve:

$$\begin{pmatrix} x \\ y \end{pmatrix} = \begin{pmatrix} \cos\varphi & -\sin\varphi \\ \sin\varphi & \cos\varphi \end{pmatrix} \cdot \begin{pmatrix} x_{AS} \\ y_{AS} \end{pmatrix} + \begin{pmatrix} 0 \\ Hub \end{pmatrix}$$

Um einen Unwuchtausgleich zu erzielen, ergibt sich zwischen dem Hub des Schiebers und dem Drehwinkel φ des Ausgleichskörpers folgende Beziehung

$$\varphi = Arc\sin\left( \frac{Hub - y_{Ausgleich}}{x_{AS-TSW_\rho}} \right)$$

wobei $y_{Ausgleich}$ die Lage des Ausgleichskörperschwerpunkts darstellt. Dementsprechend kann der Drehwinkel beeinflusst werden durch die Wahl von $y_{Ausgleich}$.

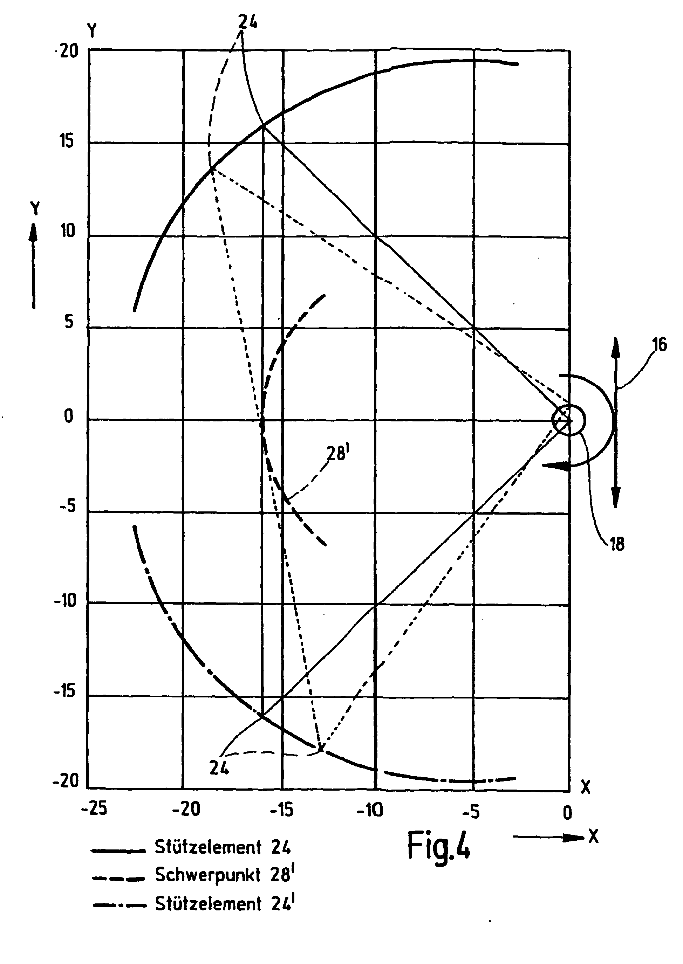

In Fig. 4 sind beispielhaft die Bahnen der beiden Stützelemente 24, 24' und des Schwerpunktes 28, 28' eines der Ausgleichsschieber 20 dargestellt. Die Bahnkurven im Grundkörper-Koordinatensystem bilden zugleich die Zwangsführungen für die beiden Stützelemente 24,24' an dem betreffenden Ausgleichskörper 20. Der Tilgungsausgleich erfolgt dadurch, dass die zur Verfügung stehenden freien Parameter an die konkreten Bedürfnisse des Schieber-Ausgleichskörper-Systems angepasst werden. Hierfür bieten sich folgende Variablen an:

    a) die $x_{AS}$ / $y_{AS}$ -Koordinaten der Stützelemente
    b) die $x_{AS}$-Koordinaten des Massenschwerpunktes des Ausgleichskörpers
    c) die Massen der Ausgleichskörper
    d) ein Proportionalitätsfaktor.

Bei geeigneter Wahl der genannten Parameter erhält man in einem vorgegebenen Hubbereich einen Ausgleich der Fliehkräfte zwischen Werkzeugschieber 14 und Ausgleichskörpem 20.

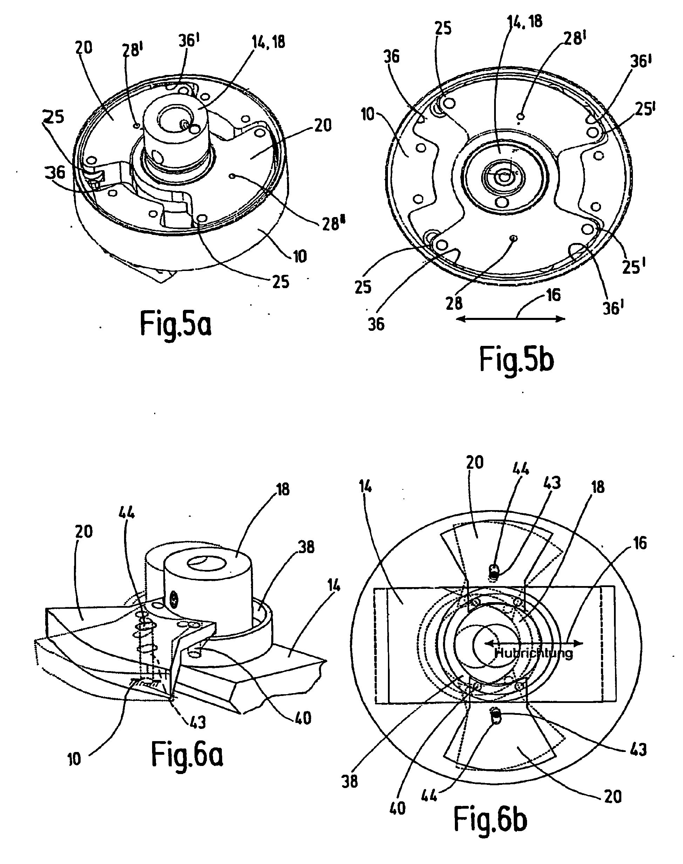

Das in Fig. 5a und b gezeigte Ausführungsbeispiel unterscheidet sich von dem Ausführungsbeispiel nach Fig. 1 und 2a und b dadurch, dass statt der Führungskulissen 26,26' Führungskurven 36,36' in der Nähe einer Gehäusewand des Grundkörpers 10 vorgesehen sind, gegen die die Stützelemente 25,25' in Form von radial über die Ausgleichskörper 20 überstehenden Rollen anliegen.

Bei dem Ausführungsbeispiel nach Fig. 6a und b sind die Ausgleichskörper 20 mit Lagerelementen 40 in Form von Gleit- oder Rollzapfen in einer die Werkzeugaufnahme 18 umgebenden Kreisnut 38 gelagert. Außerdem befindet sich in den Ausgleichskörpern 20 jeweils eine radial nach außen weisende Führungskulisse 44, in welche ein grundkörperfestes Stützelement 43 in Form eines Zapfens eingreift. Auch mit diesen Maßnahmen lässt sich eine definierte Verschiebe- und Schwenkbewegung erzielen, die zu einem Wuchtausgleich führt.

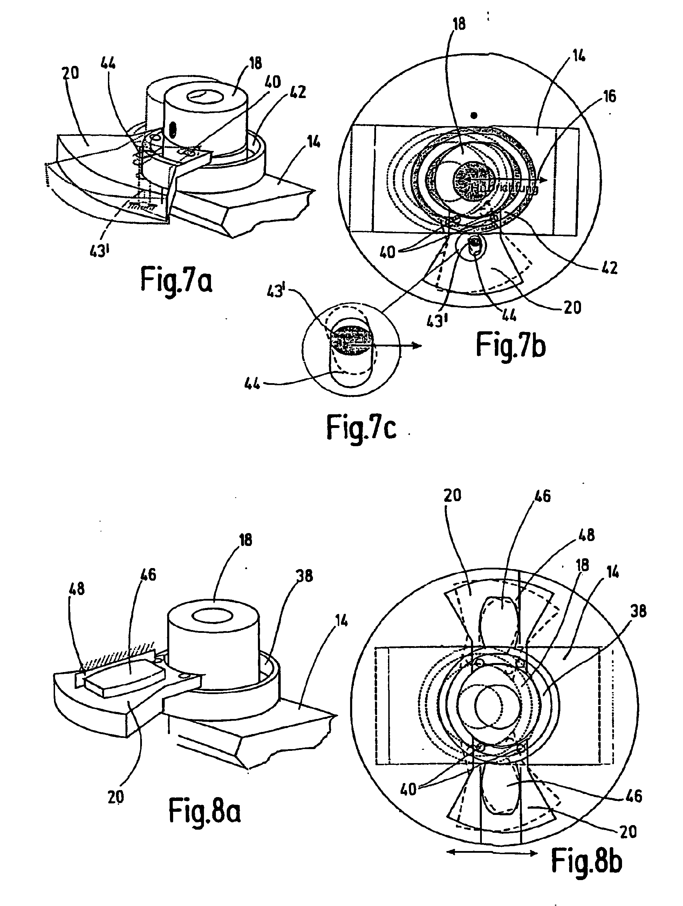

Entsprechendes gilt für das in Fig. 7a bis c gezeigte Ausführungsbeispiel, bei welchem die Werkzeugaufnahme 18 von einer ovalen Nut 42 umfasst ist, in die die Ausgleichskörper 20 wiederum mit zapfenförmigen Stützelementen 40 eingreifen. Auch hier ist in den Ausgleichskörpem 20 eine Führungskurve in Form eines Langlochs 44 angeordnet, in die ein grundkörperfestes Stützelement 43' in Form eines ovalen Zapfens eingreift.

Das Ausführungsbeispiel nach Fig. 8a und b entspricht im Wesentlichen der Ausführungsform nach Fig. 7a bis c mit dem einen Unterschied, dass das an den Ausgleichskörpem 20 anstelle eines Langlochs ein Führungsnocken 46 angeordnet ist, der gegen eine grundkörperfeste Führungskurve 48 anliegt und bei einer Hubbewegung gegenüber dieser abrollt.

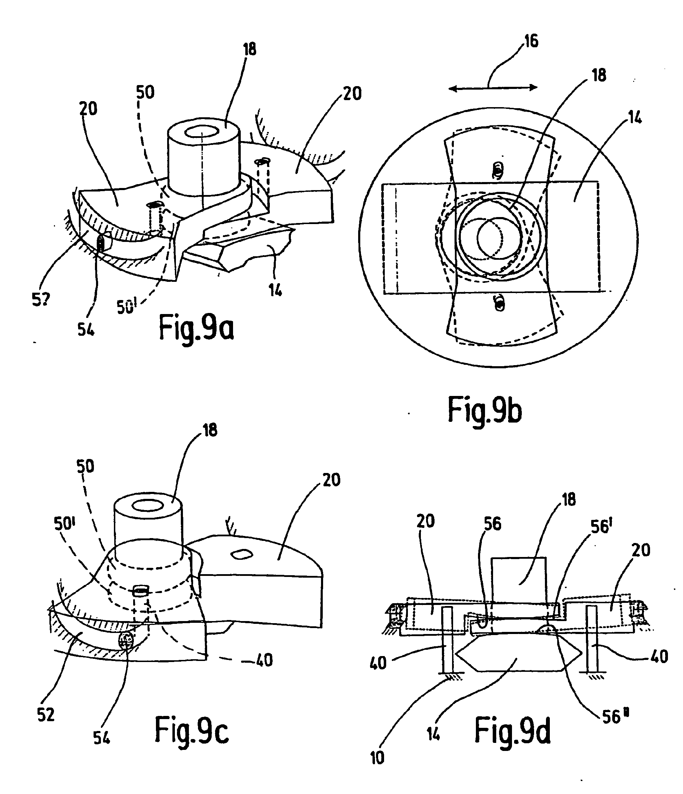

Die Ausführungsform nach Fig. 9a bis d entspricht im Prinzip dem Ausführungsbeispiel nach Fig. 6a und b, mit dem einen Unterschied, dass die Ausgleichskörper 20 neben einer Schwenkbewegung um die schieberfeste Werkzeugaufnahme 18 zusätzlich axial ausgelenkt werden. Um dies zu ermöglichen, sind die Drehlager 50,50' der Ausgleichskörper 20 als Kugellager ausgebildet, während die grundkörperfesten Führungskulissen 52, in denen ausgleichskörperfeste Stützelemente 54 geführt sind, eine Taumelbewegung in axialer Richtung verursachen. Um den taumelnden Bewegungsablauf zu ermöglichen, weisen die Ausgleichskörper 20 und, der Schieber 14 gegeneinander anliegende ballige Anlageflächen 56, 56', 56" auf. Mit diesen Maßnahmen ist es möglich, beim Verschiebevorgang des Schiebers 14 mit den Ausgleichskörpem 20 etwaigen Störkonturen auszuweichen.

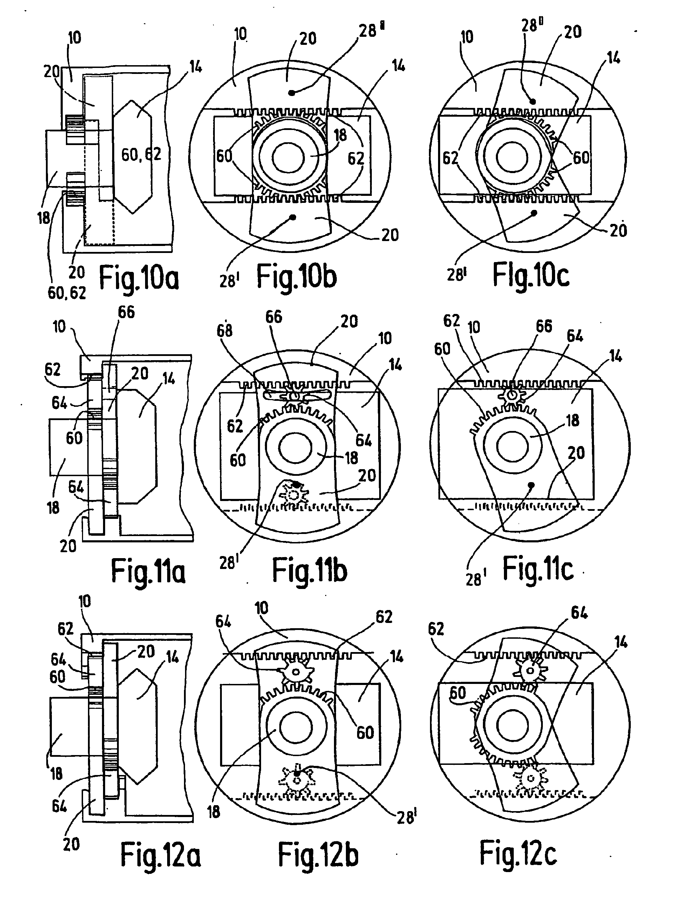

Bei den Ausführungsformen nach den Fig. 10a bis c, 11a bis c und 12a bis c sind die Zwangsführungsmittel zwischen den Ausgleichskörpem 20 und dem Grundkörper 10 als unmittelbar oder mittelbar miteinander kämmende Verzahnungspartien 60,62 ausgebildet. Die um die schieberfeste Schwenkachse 15 verschwenkbaren Ausgleichskörper 20 werden dort beim Verstellvorgang mit einer ausgleichsschieberfesten, zur Schwenkachse 15 koaxial gekrümmten Zahnreihe 60 unmittelbar oder über ein Zwischenzahnrad 64 mittelbar entlang einer linearen grundkörperfesten Zahnreihe 62 zwangsgeführt. Die die grundkörperfesten Verzahnungspartien bildenden Zahnreihen 62 sind parallel zur Verschiebeachse 16 ausgerichtet. Bei dem in Fig. 10a bis c gezeigten Ausführungsbeispiel kämmen die Zahnreihen 60,62 der beiden Verzahnungspartien unmittelbar miteinander. Dementsprechend sind die ausgleichsschieberfesten Zahnreihen in diesem Fall bezüglich der Schwenkachse 15 auf der gleichen Seite wie der Massenschwerpunkt 28',28" des zugehörigen Ausgleichskörpers angeordnet. Abweichend hiervon ist bei den in Fig. 11a bis c und 12a bis c gezeigten Ausführungsbeispielen mit dem zusätzlichen Zwischenzahnrad 64 die ausgleichsschieberfeste Verzahnungspartie 60 jeweils auf der dem Massenschwerpunkt 28',28" gegenüberliegenden Seite bezogen auf die Schwenkachse 15 angeordnet. Diese beiden Ausführungsformen unterscheiden sich vor allem darin, dass die Zwischenzahnräder 64 im Falle der Fig. 11a bis c im Schieber 14 und im Falle der Fig. 12a bis c im Grundkörper 10 gelagert sind. Dabei kann es vor allem bei der schieberfesten Lagerung notwendig sein, dass eines der Zwischenzahnräder 64 mit seiner Drehachse 66 durch eine vorzugsweise gekrümmte, langgestreckte Durchtrittsöffnung 68 des anderen Ausgleichskörpers 20 hindurch greift. Die Verzahnungspartien 60,62 gegebenenfalls mit Zwischenzahnrad 64 werden so aufeinander abgestimmt, dass man in einem vorgegebenen Hubbereich einen Ausgleich der Fliehkräfte zwischen Werkzeugschieber 14 und Ausgleichskörper 20 erhält.

Zusammenfassend ist folgendes festzuhalten: Die Erfindung bezieht sich auf einen Werkzeugkopf für den Einsatz in Werkzeugmaschinen. Der Werkzeugkopf weist einen um eine Rotationsachse 13 drehbaren Grundkörper 10, einen ein Schneidwerkzeug tragenden, mittels eines Antriebsmechanismus entlang einer bezüglich der Rotationsachse 13 radial ausgerichteten Verschiebeachse 16 gegenüber dem Grundkörper 10 verstellbaren Schieber 14 und mindestens einen Ausgleichskörper 20 zur Tilgung einer durch den Schieber 14 hervorgerufenen Unwucht auf. Um neben der Unwuchttilgung auch eine Reduzierung der Betätigungskräfte zu erzielen, wird gemäß der Erfindung vorgeschlagen, dass mindestens zwei Ausgleichskörper 20 vorgesehen sind, die mit ihrem Massenschwerpunkt 28', 28" seitlich über die Verschiebeachse 16 überstehen und die an im Abstand voneinander angeordneten Stellen relativ zum Schieber und relativ zum Grundkörper zwangsgeführt und/oder verschwenkbar sind.

## Patentansprüche

1. Werkzeugkopf für den Einsatz in Werkzeugmaschinen mit einem um eine Rotationsachse (13) drehbaren Grundkörper (10), mit einem ein Schneidwerkzeug tragenden, mittels eines Antriebsmechanismus entlang einer bezüglich der Rotationsachse radial ausgerichteten Verschiebeachse (16) gegenüber dem Grundkörper (10) verstellbaren Schieber (14) und mit mindestens einem Ausgleichskörper (20) zur Tilgung einer durch den Schieber (14) und das Schneidwerkzeug hervorgerufenen Unwucht, wobei mindestens zwei Ausgleichskörper (20) vorgesehen sind, die mit ihrem Massenschwerpunkt (28',28") seitlich über die Verschiebeachse (16) überstehen und relativ zum Schieber (14) und relativ zum Grundkörper (10) zwangsgeführt und/oder verschwenkbar sind, **dadurch gekennzeichnet, dass** die Ausgleichskörper (20) um eine schieberfeste Schwenkachse verschwenkbar gelagert und im Abstand von der Schwenkachse relativ zum Grundkörper zwangsgeführt sind.

2. Werkzeugkopf nach Anspruch 1, **dadurch gekennzeichnet, dass** zwei (20) Ausgleichskörper vorgesehen sind, die um die gleiche, die Verschiebeachse (16) des Schiebers senkrecht schneidende Schwenkachse (15) nach entgegengesetzten Richtungen verschwenkbar gelagert sind.

3. Werkzeugkopf nach Anspruch 1 oder 2, **dadurch gekennzeichnet, dass** die Ausgleichskörper (20) bezüglich der Verschiebeachse (16) im Wesentlichen spiegelbildlich ausgebildet und angeordnet sind.

4. Werkzeugkopf nach einem der Ansprüche 1 bis 3, **dadurch gekennzeichnet, dass** der Schieber (14) eine Aufnahme (18) für das Schneidwerkzeug aufweist, deren Aufnahmeachse parallel zu den schieberfesten Schwenkachsen (15) der Ausgleichskörper (20) angeordnet ist.

5. Werkzeugkopf nach einem der Ansprüche 1 bis 3, **dadurch gekennzeichnet, dass** der Schieber (14) eine Aufnahme (18) für das Schneidwerkzeug aufweist, deren Aufnahmeachse schräg zu den schieberfesten Schwenkachsen (15) der Ausgleichskörper (20) angeordnet ist.

6.  Werkzeugkopf nach Anspruch 4 oder 5, **dadurch gekennzeichnet, dass** die Aufnahmeachse und die schieberfesten Schwenkachsen der Ausgleichskörper zusammenfallen.

7.  Werkzeugkopf nach einem der Ansprüche 1 bis 6, **dadurch gekennzeichnet, dass** die Massenschwerpunkte (28', 28") des mit dem Schneidwerkzeug bestückten Schiebers (14) und der Ausgleichskörper (20) bezüglich der Rotationsachse (13) im Wesentlichen auf gleicher axialer Höhe angeordnet sind.

8.  Werkzeugkopf für den Einsatz in Werkzeugmaschinen mit einem um eine Rotationsachse (13) drehbaren Grundkörper (10), mit einem ein Schneidwerkzeug tragenden, mittels eines Antriebsmechanismus entlang einer bezüglich der Rotationsachse radial ausgerichteten Verschiebeachse (16) gegenüber dem Grundkörper (10) verstellbaren Schieber (14) und mit mindestens einem Ausgleichskörper (20) zur Tilgung einer durch den Schieber (14) und das Schneidwerkzeug hervorgerufenen Unwucht, wobei mindestens zwei Ausgleichskörper (20) vorgesehen sind, die mit ihrem Massenschwerpunkt (28',28") seitlich über die Verschiebeachse (16) überstehen und relativ zum Schieber (14) und relativ zum Grundkörper (10) zwangsgeführt und/oder verschwenkbar sind, **dadurch gekennzeichnet, dass** die Massenschwerpunkte (28',28") des mit dem Schneidwerkzeug bestückten Schiebers (10) und der Ausgleichskörper (20) bezüglich der Rotationsachse (13) im Wesentlichen auf gleicher axialer Höhe angeordnet sind.

9.  Werkzeugkopf nach einem der Ansprüche 1 bis 8, **dadurch gekennzeichnet, dass** das schieberfeste Schwenklager als die Werkzeugaufnahme (18) umgebende Kreisnut (38) ausgebildet ist, in die die Ausgleichskörper (20) mit jeweils mindestens einem als Zapfen oder Rolle ausgebildeten Lagerelement (40) eingreifen.

10. Werkzeugkopf nach einem der Ansprüche 1 bis 9, **dadurch gekennzeichnet, dass** die Ausgleichskörper (20) eine über eine zentrale Lagerpartie segmentartig überstehende massenbehaftete Scheibe tragen.

11. Werkzeugkopf nach einem der Ansprüche 1 bis 10, **dadurch gekennzeichnet, dass** die schieberfeste Schwenkachse der Ausgleichskörper (20) parallel zur Rotationsachse (13) ausgerichtet ist.

12. Werkzeugkopf nach einem der Ansprüche 1 bis 11, **dadurch gekennzeichnet, dass** der Grundkörper (10) und die Ausgleichskörper (20) unmittelbar oder mittelbar miteinander kämmende Verzahnungspartien (60,62) als Zwangsführungsmittel aufweisen.

13. Werkzeugkopf für den Einsatz in Werkzeugmaschinen mit einem um eine Rotationsachse (13) drehbaren Grundkörper (10), mit einem ein Schneidwerkzeug tragenden, mittels eines Antriebsmechanismus entlang einer bezüglich der Rotationsachse radial ausgerichteten Verschiebeachse (16) gegenüber dem Grundkörper (10) verstellbaren Schieber (14) und mit mindestens einem Ausgleichskörper (20) zur Tilgung einer durch den Schieber (14) und das Schneidwerkzeug hervorgerufenen Unwucht, wobei mindestens zwei Ausgleichskörper (20) vorgesehen sind, die mit ihrem Massenschwerpunkt (28',28") seitlich über die Verschiebeachse (16) überstehen und relativ zum Schieber (14) und relativ zum Grundkörper (10) zwangsgeführt und/oder verschwenkbar sind, **dadurch gekennzeichnet, dass** der Grundkörper (10) und die Ausgleichskörper (20) unmittelbar oder mittelbar miteinander kämmende Verzahnungspartien (60,62) als Zwangsführungsmittel aufweisen.

14. Werkzeugkopf nach einem der Ansprüche 1 bis 13, **dadurch gekennzeichnet, dass** die Ausgleichskörper (20) beim Verstellvorgang mit einer ausgleichskörperfesten Verzahnungspartie (60) unmittelbar oder über ein Zwischenzahnrad (64) mittelbar entlang einer komplementären, grundkörperfesten Verzahnungspartie (62) zwangsgeführt sind.

15. Werkzeugkopf nach einem der Ansprüche 12 bis 14, **dadurch gekennzeichnet, dass** die ausgleichskörperfesten Verzahnungspartien (60) als zur schieberfesten Schwenkachse (15) der Ausgleichskörper (20) konzentrisch gekrümmte Zahnreihen und die grundkörperfesten Verzahnungspartien (62) als parallel zur Verschiebeachse (16) des Schiebers (14) ausgerichtete lineare Zahnreihen ausgebildet sind.

16. Werkzeugkopf nach einem der Ansprüche 12 bis 15, **dadurch gekennzeichnet dass** die ausgleichskörperfesten Verzahnungspartien (60) unmittelbar in eine benachbarte grundkörperfeste Verzahnungspartie (62) eingreifen und bezüglich der Schwenkachse (15) auf der Seite des Massenschwerpunkts (28',28") des zugehörigen Ausgleichskörpers (20) angeordnet sind.

17. Werkzeugkopf nach einem der Ansprüche 12 bis 16, **dadurch gekennzeichnet, dass** die ausgleichskörperfesten Verzahnungspartien (60) mittelbar über ein Zwischenzahnrad (64) mit einer benachbarten grundkörperfesten Verzahnungspartie (62) kämmen und bezüglich der Schwenkachse (15) auf der dem Massenschwerpunkt (28',28") des zugehörigen Ausgleichskörpers (20) gegenüberliegenden Seite angeordnet sind.

18. Werkzeugkopf nach einem der Ansprüche 12 bis 15 oder 17, **dadurch gekennzeichnet, dass** mindestens eines der Zwischenzahnräder (64) in einem grundkörperfesten Drehlager gelagert ist.

19. Werkzeugkopf nach einem der Ansprüche 12 bis 15 oder 17, **dadurch gekennzeichnet, dass** mindestens eines der Zwischenzahnräder (64) in einem schieberfesten Drehlager gelagert ist.

20. Werkzeugkopf nach Anspruch 18 oder 19, **dadurch gekennzeichnet, dass** mindestens eines der Zwischenzahnräder (64) mit einer Achswelle (66) des Drehlagers durch eine vorzugsweise langgestreckte gekrümmte Durchtrittsöffnung (68) des anderen Ausgleichskörpers (20) hindurchgreift.

21. Werkzeugkopf nach einem der Ansprüche 1 bis 11, **dadurch gekennzeichnet, dass** die Ausgleichskörper (20) beim Verstellvorgang mit mindestens einem ausgleichskörperfesten Stützelement (24,24') entlang mindestens einer grundkörperfesten Führungskurve (26,26') oder -kulisse zwangsgeführt sind.

22. Werkzeugkopf nach einem der Ansprüche 1 bis 11, **dadurch gekennzeichnet, dass** die Ausgleichskörper (20) beim Verstellvorgang mit mindestens einem grundkörperfesten Stützelement (40) entlang mindestens einer ausgleichskörperfesten Führungskurve oder -kulisse zwangsgeführt sind.

23. Werkzeugkopf nach Anspruch 21 oder 22, **dadurch gekennzeichnet, dass** die Stützelemente (24,24') als an dem Ausgleichskörper (20) überstehende Gleitschuhe oder Rollzapfen ausgebildet sind, die gegen die im Grundkörper (10) angeordneten Führungskurven (26,26') oder - kulissen gleitend oder rollend abgestützt sind oder hydrodynamisch gelagert sind.

24. Werkzeugkopf nach einem der Ansprüche 21 bis 23, **dadurch gekennzeichnet, dass** die Führungskurven (26,26') oder -kulissen in Form von Langlöchern oder Nuten in eine Grundkörperwand eingeformt sind.

25. Werkzeugkopf nach einem der Ansprüche 21 bis 24, **dadurch gekennzeichnet, dass** jedem Stützelement (24,24') eine eigene Führungskurve (26,26') oder -kulisse zugeordnet ist.

26. Werkzeugkopf nach Anspruch 25, **dadurch gekennzeichnet, dass** jedem Ausgleichskörper (20) zwei Führungskurven (26,26') oder -kulissen für die unterschiedlichen Stützelemente (24,24') zugeordnet sind.

27. Werkzeugkopf nach einem der Ansprüche 21 bis 26, **dadurch gekennzeichnet, dass** die Führungskurven (26,26') oder -kulissen der verschiedenen Ausgleichskörper (20) spiegelbildlich zueinander angeordnet sind.

28. Werkzeugkopf nach einem der Ansprüche 21 bis 26, **dadurch gekennzeichnet, dass** die Führungskurven oder -kulissen als im Wesentlichen radial ausgerichtete Langlöcher (44) oder Nuten in den Ausgleichskörpem (20) ausgebildet sind, in die ein am Grundkörper (10) angeordnetes Stützelement (43) eingreift.

29. Werkzeugkopf nach Anspruch 28, **dadurch gekennzeichnet, dass** die schieberfesten Zwangsführungen durch eine die Werkzeugaufnahme (18) umgebende Ovalnut (42) gebildet sind.

30. Werkzeugkopf nach Anspruch 29, **dadurch gekennzeichnet, dass** die längere Ovalachse parallel zur Verschiebeachse (16) des Schiebers (14) ausgerichtet ist.

31. Werkzeugkopf nach einem der Ansprüche 1 bis 30, **dadurch gekennzeichnet, dass** die Ausgleichskörper (20) relativ zum Schieber und/oder zum Grundkörper in einer Taumelführung (52) mit zur Rotationsachse achsparalleler Bewegungskomponente zwangsgeführt und/oder verschwenkbar sind.

32. Werkzeugkopf für den Einsatz in Werkzeugmaschinen mit einem um eine Rotationsachse (13) drehbaren Grundkörper (10), mit einem ein Schneidwerkzeug tragenden, mittels eines Antriebsmechanismus entlang einer bezüglich der Rotationsachse radial ausgerichteten Verschiebeachse (16) gegenüber dem Grundkörper (10) verstellbaren Schieber (14) und mit mindestens einem Ausgleichskörper (20) zur Tilgung einer durch den Schieber (14) und das Schneidwerkzeug hervorgerufenen Unwucht, wobei mindestens zwei Ausgleichskörper (20) vorgesehen sind, die mit ihrem Massenschwerpunkt (28',28") seitlich über die Verschiebeachse (16) überstehen und relativ zum Schieber (14) und relativ zum Grundkörper (10) zwangsgeführt und/oder verschwenkbar sind, **dadurch gekennzeichnet, dass** die Ausgleichskörper (20) relativ zum Schieber und/oder zum Grundkörper in einer Taumelführung (52) mit zur Rotationsachse achsparalleler Bewegungskomponente zwangsgeführt und/oder verschwenkbar sind.

33. Werkzeugkopf nach einem der Ansprüche 1 bis 32, **dadurch gekennzeichnet, dass** die Ausgleichskörper (20) mit modulmäßig gegeneinander austauschbaren Massenelementen bestückt sind.

34. Werkzeugkopf nach Anspruch 33, **dadurch gekennzeichnet, dass** die Massenelemente unter Beibehaltung der ausgleichskörperseitigen Massenschwerpunkte (28',28") austauschbar sind.

35. Werkzeugkopf nach einem der Ansprüche 1 bis 34, **dadurch gekennzeichnet, dass** die Ausgleichskörper (20) modulmäßig austauschbar sind.

36. Werkzeugkopf nach einem der Ansprüche 1 bis 35, **gekennzeichnet durch** ein aus einem Grundkörperteil und den Ausgleichskörpem (20) bestehendes austauschbares Ausgleichsmodul.

37. Werkzeugkopf nach Anspruch 36, **dadurch gekennzeichnet, dass** das Ausgleichsmodul zusätzlich den Werkzeugschieber umfasst.

**Claims**

1. A tool head for use in machine tools, having a basic body (10) rotatable about a rotation axis (13), having a slide (14) carrying a cutting tool and adjustable by means of a drive mechanism relative to the basic body (10) along a displacement axis (16) oriented radially with respect to the rotation axis, and having at least one balancing body (20) for damping unbalance caused by the slide (14) and the cutting tool, at least two balancing bodies (20) being provided which project laterally with their center of gravity (28', 28") beyond the displacement axis (16) and are positively guided and/or are pivotable relative to the slide (14) and relative to the basic body (10), **characterized in that** the balancing bodies (20) are mounted so as to be pivotable about a pivot axis fixed relative to the slide and are positively guided relative to the basic body at a distance from the pivot axis.

2. The tool head as claimed in claim 1, **characterized in that** two balancing bodies (20) are provided which are mounted so as to be pivotable in opposite directions about the same pivot axis (15) intersecting the displacement axis (16) of the slide at right angles.

3. The tool head as claimed in claim 1 or 2, **characterized in that** the balancing bodies (20) are designed and arranged essentially in mirror image with respect to the displacement axis (16).

4. The tool head as claimed in one of claims 1 to 3, **characterized in that** the slide (14) has a receptacle (18) for the cutting tool, the receptacle axis of which is arranged parallel to the pivot axes (15), fixed relative to the slide, of the balancing bodies (20).

5. The tool head as claimed in one of claims 1 to 3, **characterized in that** the slide (14) has a receptacle (18) for the cutting tool, the receptacle axis of which is arranged obliquely relative to the pivot axes (15), fixed relative to the slide, of the balancing bodies (20).

6. The tool head as claimed in claim 4 or 5, **characterized in that** the receptacle axis and the pivot axes, fixed relative to the slide, of the balancing bodies coincide.

7. The tool head as claimed in one of claims 1 to 6, **characterized in that** the centers of gravity (28', 28") of the slide (14), fitted with the cutting tool, and of the balancing bodies (20) are arranged essentially at the same axial height with respect to the rotation axis (13).

8. A tool head for use in machine tools, having a basic body (10) rotatable about a rotation axis (13), having a slide (14) carrying a cutting tool and adjustable by means of a drive mechanism relative to the basic body (10) along a displacement axis (16) oriented radially with respect to the rotation axis, and having at least one balancing body (20) for damping unbalance caused by the slide (14) and the cutting tool, at least two balancing bodies (20) being provided which project laterally with their center of gravity (28', 28") beyond the displacement axis (16) and are positively guided and/or are pivotable relative to the slide (14) and relative to the basic body (10), **characterized in that** the centers of gravity (28', 28") of the slide (10), fitted with the cutting tool, and of the balancing bodies (20) are arranged essentially at the same axial height with respect to the rotation axis (13).

9. The tool head as claimed in one of claims 1 to 8, **characterized in that** the pivot bearing fixed relative to the slide is designed as a circular groove (38) which surrounds the tool receptacle (18) and in which the balancing bodies (20) engage by means of at least one respective bearing element (40) designed as a pin or roller.

10. The tool head as claimed in one of claims 1 to 9, **characterized in that** the balancing bodies (20) carry a disk affected by mass and projecting in a segment-like manner beyond a central bearing part.

11. The tool head as claimed in one of claims 1 to 10, **characterized in that** the pivot axis, fixed relative to the slide, of the balancing bodies (20) is oriented parallel to the rotation axis (13).

12. The tool head as claimed in one of claims 1 to 11, **characterized in that** the basic body (10) and the balancing bodies (20) have, as positive guide means, toothing parts (60, 26) which intermesh directly or indirectly.

13. A tool head for use in machine tools, having a basic body (10) rotatable about a rotation axis (13), having a slide (14) carrying a cutting tool and adjustable by means of a drive mechanism relative to the basic body (10) along a displacement axis (16) oriented radially with respect to the rotation axis, and having at least one balancing body (20) for damping unbalance caused by the slide (14) and the cutting tool, at least two balancing bodies (20) being provided which project laterally with their center of gravity (28', 28") beyond the displacement axis (16) and are positively guided and/or are pivotable relative to the slide (14) and relative to the basic body (10), **characterized in that** the basic body (10) and the balancing bodies (20) have, as positive guide means, toothing parts (60, 62) which intermesh directly or indirectly.

14. The tool head as claimed in one of claims 1 to 13, **characterized in that** the balancing bodies (20), during the adjusting operation, are positively guided along a complementary tooth part (62), fixed relative to the basic body, directly by means of a toothing part (60) fixed relative to the balancing bodies, or indirectly via an intermediate gear (64).

15. The tool head as claimed in one of claims 12 to 14, **characterized in that** the toothing parts (60) fixed relative to the balancing bodies are designed as tooth rows curved concentrically to the pivot axis (15), fixed relative to the slide, of the balancing bodies (20), and the toothing parts (62) fixed relative to the basic body are designed as linear tooth rows oriented parallel to the displacement axis (16) of the slide (14).

16. The tool head as claimed in one of claims 12 to 15, **characterized in that** the toothing parts (60) fixed relative to the balancing bodies engage directly in an adjacent toothing part (62) fixed relative to the basic body and are arranged with respect to the pivot axis (15) on the side of the center of gravity (28', 28") of the associated balancing body (20).

17. The tool head as claimed in one of claims 12 to 16, **characterized in that** the toothing parts (60) fixed relative to the balancing bodies mesh indirectly via an intermediate gear (64) with an adjacent toothing part (62) fixed relative to the basic body and are arranged with respect to the pivot axis (15) on the side opposite the center of gravity (28', 28") of the associated balancing body (20).

18. The tool head as claimed in one of claims 12 to 15 or 17, **characterized in that** at least one of the intermediate gears (64) is mounted in a rotary bearing fixed relative to the basic body.

19. The tool head as claimed in one of claims 12 to 15 or 17, **characterized in that** at least one of the intermediate gears (64) is mounted in a rotary bearing fixed relative to the slide.

20. The tool head as claimed in either of claims 18 and 19, **characterized in that** at least one of the intermediate gears (64) passes with a shaft (66) of the rotary bearing through a preferably elongated curved through-opening (68) of the other balancing body (20).

21. The tool head as claimed in one of claims 1 to 11, **characterized in that** the balancing bodies (20), during the adjusting operation, are positively guided along at least one guide curve (26, 26') or link, fixed relative to the basic body, by at least one supporting element (24, 24') fixed relative to the balancing bodies.

22. The tool head as claimed in one of claims 1 to 11, **characterized in that** the balancing bodies (20), during the adjusting operation, are positively guided along at least one guide curve or link, fixed relative to the balancing bodies, by at least one supporting element (40) fixed relative to the basic body.

23. The tool head as claimed in claim 21 or 22, **characterized in that** the supporting elements (24, 24') are designed as sliding shoes or rolling pins which project on the balancing body (20) and are supported in a sliding or rolling manner against the guide curves (26, 26') or links arranged in the basic body (10) or are hydrodynamically mounted.

24. The tool head as claimed in one of claims 21 to 23, **characterized in that** the guide curves (26, 26') or links are formed in a wall of the basic body in the form of elongated holes or grooves.

25. The tool head as claimed in one of claims 21 to 24, **characterized in that** a separate guide curve (26, 26') or link is assigned to each supporting element (24, 24').

26. The tool head as claimed in claim 25, **characterized in that** two guide curves (26, 26') or links for different supporting elements (24, 24') are assigned to each balancing body (20).

27. The tool head as claimed in one of claims 21 to 26, **characterized in that** the guide curves (26, 26') or links of the different balancing bodies (20) are arranged in mirror image to one another.

28. The tool head as claimed in one of claims 21 to 27, **characterized in that** the guide curves or links are formed in the balancing bodies (20) as essentially radially oriented elongated holes (44) or grooves, in which a supporting element (43) arranged on the basic body (10) engages.

29. The tool head as claimed in claim 28, **characterized in that** the positive guides fixed relative to the slide are formed by an oval groove (42) surrounding the tool receptacle (18).

30. The tool head as claimed in claim 29, **characterized in that** the longer oval axis is oriented parallel to the displacement axis (16) of the slide (14).

31. The tool head as claimed in one of claims 1 to 30, **characterized in that** the balancing bodies (20) are positively guided and/or are pivotable relative to the slide and/or the basic body in a wobble guide (52) with a component motion axially parallel to the rotation axis.

32. A tool head for use in machine tools, having a basic body (10) rotatable about a rotation axis (13), having a slide (14) carrying a cutting tool and adjustable by means of a drive mechanism relative to the basic body (10) along a displacement axis (16) oriented radially with respect to the rotation axis, and having at least one balancing body (20) for damping unbalance caused by the slide (14) and the cutting tool, at least two balancing bodies (20) being provided which project laterally with their center of gravity (28', 28") beyond the displacement axis (16) and are positively guided and/or are pivotable relative to the slide (14) and relative to the basic body (10), **characterized in that** the balancing bodies (20) are positively guided and/or are pivotable relative to the slide and/or the basic body in a wobble guide (52) with a component motion axially parallel to the rotation axis.

33. The tool head as claimed in one of claims 1 to 32, **characterized in that** the balancing bodies (20) are fitted with mass elements which can be interchanged in a modular manner.

34. The tool head as claimed in claim 33, **characterized in that** the mass elements can be interchanged while retaining the centers of gravity (28', 28") on the side of the balancing bodies.

35. The tool head as claimed in one of claims 1 to 34, **characterized in that** the balancing bodies (20) can be interchanged in a modular manner.

36. The tool head as claimed in one of claims 1 to 35, **characterized by** an interchangeable balancing module consisting of a basic body part and the balancing bodies (20).

37. The tool head as claimed in claim 36, **characterized in that** the balancing module additionally comprises the tool slide.

## Revendications

1. Tête d'outillage dévolue à l'utilisation dans des machines-outils, comprenant un corps de base (10) pouvant tourner autour d'un axe de rotation (13), un coulisseau (14) portant un outil de coupe et pouvant être déplacé vis-à-vis dudit corps de base (10), au moyen d'un mécanisme d'entraînement, le long d'un axe de coulissement (16) orienté radialement par rapport audit axe de rotation, et au moins un corps de compensation (20) destiné à contrebalancer un déséquilibre provoqué par ledit coulisseau (14) et ledit outil de coupe, ladite tête comprenant au moins deux corps de compensation (20) qui font latéralement saillie au-delà dudit axe de coulissement (16), par leur centre de gravité (28', 28"), et sont guidés à force et/ou peuvent être animés de pivotements par rapport audit coulisseau (14) et par rapport audit corps de base (10), **caractérisée par le fait que** les corps de compensation (20) sont montés pivotants autour d'un axe de pivotement assujetti au coulisseau et sont guidés à force, par rapport au corps de base, à distance dudit axe de pivotement.

2. Tête d'outillage selon la revendication 1, **caractérisée par** la présence de deux corps de compensation (20) montés pivotants, vers des directions opposées, autour du même axe de pivotement (15) coupant verticalement l'axe de coulissement (16) du coulisseau.

3. Tête d'outillage selon la revendication 1 ou 2, **caractérisée par le fait que** les corps de compensation (20) sont réalisés et agencés, pour l'essentiel, spéculairement par rapport à l'axe de coulissement (16).

4. Tête d'outillage selon l'une des revendications 1 à 3, **caractérisée par le fait que** le coulisseau (14) est pourvu d'un logement (18) qui est dédié à l'outil de coupe et dont l'axe est disposé parallèlement aux axes de pivotement (15) des corps de compensation (20), assujettis audit coulisseau.

5. Tête d'outillage selon l'une des revendications 1 à 3, **caractérisée par le fait que** le coulisseau (14) est pourvu d'un logement (18) qui est dédié à l'outil de coupe et dont l'axe est disposé à l'oblique par rapport aux axes de pivotement (15) des corps de compensation (20), assujettis audit coulisseau.

6. Tête d'outillage selon la revendication 4 ou 5, **caractérisée par le fait que** l'axe du logement et les axes de pivotement des corps de compensation, assujettis au coulisseau, sont en coïncidence mutuelle.

7. Tête d'outillage selon l'une des revendications 1 à 6, **caractérisée par le fait que** les centres de gravité (28', 28") des corps de compensation (20), et du coulisseau (14) équipé de l'outil de coupe, sont situés sensiblement à une même hauteur axiale vis-à-vis de l'axe de rotation (13).

8. Tête d'outillage dévolue à l'utilisation dans des machines-outils, comprenant un corps de base (10) pouvant tourner autour d'un axe de rotation (13), un coulisseau (14) portant un outil de coupe et pouvant être déplacé vis-à-vis dudit corps de base (10), au moyen d'un mécanisme d'entraînement, le long d'un axe de coulissement (16) orienté radialement par rapport audit axe de rotation, et au moins un corps de compensation (20) destiné à contrebalancer un déséquilibre provoqué par ledit coulisseau (14) et ledit outil de coupe, ladite tête comprenant au moins deux corps de compensation (20) qui font latéralement saillie au-delà dudit axe de coulissement (16), par leur centre de gravité (28', 28"), et sont guidés à force et/ou peuvent être animés de pivotements par rapport audit coulisseau (14) et par rapport audit corps de base (10), **caractérisée par le fait que** les centres de gravité (28', 28") des corps de compensation (20), et du coulisseau (14) équipé de l'outil de coupe, sont situés sensiblement à une même hauteur axiale vis-à-vis de l'axe de rotation (13).

9. Tête d'outillage selon l'une des revendications 1 à 8, **caractérisée par le fait que** le palier de pivotement, assujetti au coulisseau, est réalisé sous la forme d'une rainure circulaire (38) qui entoure le logement (18) de l'outil et dans laquelle les corps de compensation (20) pénètrent par au moins un élément respectif de montage (40) se présentant comme un tenon, ou comme un rouleau.

10. Tête d'outillage selon l'une des revendications 1 à 9, **caractérisée par le fait que** les corps de compensation (20) portent un disque sollicité par une masse et faisant saillie, à la manière d'un segment, au-delà d'une partie centrale de portée.

**11.** Tête d'outillage selon l'une des revendications 1 à 10, **caractérisée par le fait que** l'axe de pivotement des corps de compensation (20), assujetti au coulisseau, est orienté parallèlement à l'axe de rotation (13).

**12.** Tête d'outillage selon l'une des revendications 1 à 11, **caractérisée par le fait que** le corps de base (10) et les corps de compensation (20) présentent, en tant que moyens de guidage forcé, des parties dentées (60, 62) en prise mutuelle d'engrènement directe ou indirecte.

**13.** Tête d'outillage dévolue à l'utilisation dans des machines-outils, comprenant un corps de base (10) pouvant tourner autour d'un axe de rotation (13), un coulisseau (14) portant un outil de coupe et pouvant être déplacé vis-à-vis dudit corps de base (10), au moyen d'un mécanisme d'entraînement, le long d'un axe de coulissement (16) orienté radialement par rapport audit axe de rotation, et au moins un corps de compensation (20) destiné à contrebalancer un déséquilibre provoqué par ledit coulisseau (14) et ledit outil de coupe, ladite tête comprenant au moins deux corps de compensation (20) qui font latéralement saillie au-delà dudit axe de coulissement (16), par leur centre de gravité (28', 28"), et sont guidés à force et/ou peuvent être animés de pivotements par rapport audit coulisseau (14) et par rapport audit corps de base (10), **caractérisée par le fait que** le corps de base (10) et les corps de compensation (20) présentent, en tant que moyens de guidage forcé, des parties dentées (60, 62) en prise mutuelle d'engrènement directe ou indirecte.

**14.** Tête d'outillage selon l'une des revendications 1 à 13, **caractérisée par le fait que**, lors du processus de déplacement, les corps de compensation (20) sont guidés à force, directement par une partie dentée (60) assujettie auxdits corps de compensation, ou indirectement au moyen d'une roue dentée intermédiaire (64), le long d'une partie dentée complémentaire (62) assujettie au corps de base.

**15.** Tête d'outillage selon l'une des revendications 12 à 14, **caractérisée par le fait que** les parties dentées (60), assujetties aux corps de compensation, se présentent comme des rangées de dents à courbure concentrique à l'axe de pivotement (15) desdits corps de compensation (20), assujetti au coulisseau, et les parties dentées (62) assujetties au corps de base se présentent comme des rangées de dents rectilignes, orientées parallèlement à l'axe de coulissement (16) dudit coulisseau (14).

**16.** Tête d'outillage selon l'une des revendications 12 à 15, **caractérisée par le fait que** les parties dentées (60), assujetties aux corps de compensation, pénètrent directement dans une partie dentée voisine (62) assujettie au corps de base et sont situées, par rapport à l'axe de pivotement (15), du côté du centre de gravité (28', 28") du corps de compensation (20) associé.

**17.** Tête d'outillage selon l'une des revendications 12 à 16, **caractérisée par le fait que** les parties dentées (60) assujetties aux corps de compensation sont en prise d'engrènement indirecte, au moyen d'une roue dentée intermédiaire (64), avec une partie dentée voisine (62) assujettie au corps de base et sont situées, par rapport à l'axe de pivotement (15), du côté opposé au centre de gravité (28', 28") du corps de compensation (20) associé.

**18.** Tête d'outillage selon l'une des revendications 12 à 15 ou 17, **caractérisée par le fait qu'**au moins l'une des roues dentées intermédiaires (64) est montée dans un palier de rotation assujetti au corps de base.

**19.** Tête d'outillage selon l'une des revendications 12 à 15 ou 17, **caractérisée par le fait qu'**au moins l'une des roues dentées intermédiaires (64) est montée dans un palier de rotation assujetti au coulisseau.

**20.** Tête d'outillage selon la revendication 18 ou 19, **caractérisée par le fait qu'**au moins l'une des roues dentées intermédiaires (64) traverse, par un arbre axial (66) du palier de rotation, un orifice curviligne de passage (68) offrant, de préférence, une forme allongée et pratiqué dans l'autre corps de compensation (20).

**21.** Tête d'outillage selon l'une des revendications 1 à 11, **caractérisée par le fait que** les corps de compensation (20) sont guidés à force lors du processus de déplacement, par au moins un élément d'appui (24, 24') assujetti auxdits corps de compensation, le long d'au moins une came ou coulisse de guidage (26, 26') assujettie au corps de base.

**22.** Tête d'outillage selon l'une des revendications 1 à 11, **caractérisée par le fait que** les corps de compensation (20) sont guidés à force lors du processus de déplacement, par au moins un élément d'appui (40) assujetti au corps de base, le long d'au moins une came ou coulisse de guidage assujettie auxdits corps de compensation.

**23.** Tête d'outillage selon la revendication 21 ou 22, **caractérisée par le fait que** les éléments d'appui (24, 24') sont réalisés sous la forme de patins de glissement ou tenons de roulement qui font saillie au-dessus du corps de compensation (20), prennent appui par glissement, ou par roulement, contre les cames ou coulisses de guidage (26, 26') situées dans le corps de base (10), ou sont montés en mode hydrodynamique.

24. Tête d'outillage selon l'une des revendications 21 à 23, **caractérisée par le fait que** les cames ou coulisses de guidage (26, 26') sont ménagées dans une paroi du corps de base, sous la forme de trous oblongs ou de rainures.

25. Tête d'outillage selon l'une des revendications 21 à 24, **caractérisée par le fait qu'**une propre came ou coulisse de guidage (26, 26') est associée à chaque élément d'appui (24, 24').

26. Tête d'outillage selon la revendication 25, **caractérisée par le fait que** deux cames ou coulisses de guidage (26, 26'), affectées aux différents éléments d'appui (24, 24'), sont associées à chaque corps de compensation (20).

27. Tête d'outillage selon l'une des revendications 21 à 26, **caractérisée par le fait que** les cames ou coulisses de guidage (26, 26') des différents corps de compensation (20) sont réciproquement agencées de manière spéculaire.

28. Tête d'outillage selon l'une des revendications 21 à 26, **caractérisée par le fait que** les cames ou coulisses de guidage sont ménagées, dans les corps de compensation (20), sous la forme de trous oblongs (44) ou de rainures orienté(e)s pour l'essentiel dans le sens radial, et dans lesquel(le)s pénètre un élément d'appui (43) situé sur le corps de base (10).

29. Tête d'outillage selon la revendication 28, **caractérisée par le fait que** les moyens de guidage forcé, assujettis au coulisseau, sont formés par une rainure ovale (42) entourant le logement (18) de l'outil.

30. Tête d'outillage selon la revendication 29, **caractérisée par le fait que** le grand axe de l'ovale est orienté parallèlement à l'axe de coulissement (16) du coulisseau (14).

31. Tête d'outillage selon l'une des revendications 1 à 30, **caractérisée par le fait que** les corps de compensation (20) sont guidés à force et/ou peuvent être animés de pivotements, vis-à-vis du coulisseau et/ou du corps de base, dans un guide oscillant (52) à composante de mouvement dont l'axe est parallèle à l'axe de rotation.

32. Tête d'outillage dévolue à l'utilisation dans des machines-outils, comprenant un corps de base (10) pouvant tourner autour d'un axe de rotation (13), un coulisseau (14) portant un outil de coupe et pouvant être déplacé vis-à-vis dudit corps de base (10), au moyen d'un mécanisme d'entraînement, le long d'un axe de coulissement (16) orienté radialement par rapport audit axe de rotation, et au moins un corps de compensation (20) destiné à contrebalancer un déséquilibre provoqué par ledit coulisseau (14) et ledit outil de coupe, ladite tête comprenant au moins deux corps de compensation (20) qui font latéralement saillie au-delà dudit axe de coulissement (16), par leur centre de gravité (28', 28"), et sont guidés à force et/ou peuvent être animés de pivotements par rapport audit coulisseau (14) et par rapport audit corps de base (10), **caractérisée par le fait que** les corps de compensation (20) sont guidés à force et/ou peuvent être animés de pivotements, vis-à-vis du coulisseau et/ou du corps de base, dans un guide oscillant (52) à composante de mouvement dont l'axe est parallèle à l'axe de rotation.

33. Tête d'outillage selon l'une des revendications 1 à 32, **caractérisée par le fait que** les corps de compensation (20) sont équipés d'éléments d'équilibrage pondéral modulairement interchangeables.

34. Tête d'outillage selon la revendication 33, **caractérisée par le fait que** les éléments d'équilibrage pondéral sont interchangeables avec maintien des centres de gravité (28', 28") situés du côté des corps de compensation.

35. Tête d'outillage selon l'une des revendications 1 à 34, **caractérisée par le fait que** les corps de compensation (20) sont modulairement interchangeables.

36. Tête d'outillage selon l'une des revendications 1 à 35, **caractérisée par** un module interchangeable de compensation, constitué des corps de compensation (20) et d'une partie formant corps de base.

37. Tête d'outillage selon la revendication 36, **caractérisée par le fait que** le module de compensation comprend additionnellement le coulisseau porte-outils.

Fig.1

**Fig.2a**

**Fig.2b**

**Fig.3**

Fig.4

——— Stützelement 24

— — — Schwerpunkt 28ᴵ

— · — Stützelement 24ᴵ

Fig.5a

Fig.5b

Fig.6a

Fig.6b

Fig.7a

Fig.7b

Fig.7c

Fig.8a

Fig.8b

Fig.9a

Fig.9b

Fig.9c

Fig.9d

Fig.10a  Fig.10b  Fig.10c

Fig.11a  Fig.11b  Fig.11c

Fig.12a  Fig.12b  Fig.12c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0488774 A